# EUROPEAN PATENT APPLICATION

(11) **EP 2 316 877 A2**
(43) Date of publication of application: **04.05.2011**
(21) Application number: 10188754.5
(22) Date of filing: 07.09.2007
(51) Int. Cl.: C08K 5/00

(54) **Materials free of endocrine disruptive activity**

(30) Priority: 08.09.2006 US 825021 P
(62) Divisional of application: 07253537.0
(71) Applicant: Bittner, George, Austin, TX 78730 (US)
(72) Inventor: Bittner, George, Austin, TX 78730 (US)
(74) Representative: Carpmaels & Ransford

(57) **Abstract**

The present invention describes chemicals that have certain properties which cause them to be free or substantially free from endocrine disruptive activity. As a result, the chemicals are useful in producing plastic materials that may be used in products which are exposed to individuals in which endocrine disruptive activity is particularly disadvantageous, such as baby bottles, baby toys, food containers, medical containers, animal cages and medical products. The chemicals may also be useful as food additives which are used in food products that are ingested by individuals in which endocrine disruptive activity is particularly disadvantageous, such as newborns or the physically infirm.

## Description

### CROSS-REFERENCE TO RELATED APPLICATIONS

This application claims priority based upon prior U.S. Provisional Patent Application Serial No. 60/825,021 filed September 8, 2006 in the name of George Bittner, entitled "Materials Free of Endocrine Disruptive Activity," the disclosure of which is incorporated herein by reference.

### FIELD

This invention relates generally to the field of plastics and, more specifically, to plastic materials that are substantially free of endocrine disruptive chemicals.

### BACKGROUND OF THE INVENTION

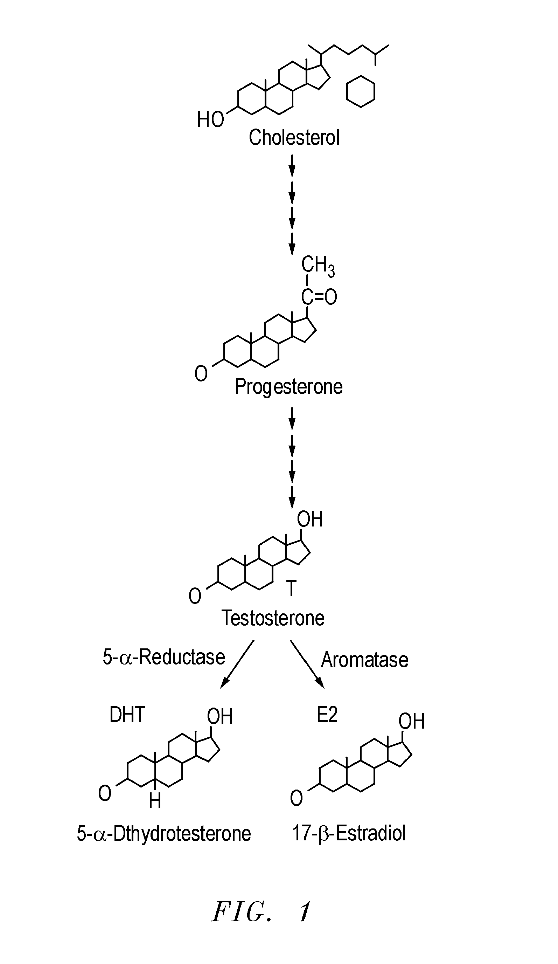

In mammals, including humans, the naturally occurring (endogenous) sex hormones are called estrogens or androgens and, as shown in FIG. 1, are endogenously synthesized from cholesterol. Cholesterol, with little or no known estrogenic or androgenic activity, is a precursor for progesterone having androgenic, but no known estrogenic, activity. Cholesterol has a cyclohexene (6-carbon ring) group with a ketone (C=O) group and a pentane (5-carbon ring) group with a methyl-carbonyl group. Progesterone is a precursor for testosterone, an androgen with a cyclohexene ring having a ketone group and a cyclopentane with a hydroxyl group. Testosterone is a precursor for 5a-dihydrotestosterone (DHT) which is a strong androgen, and 17β-estradiol (E2) which is a strong estrogen. Note that, like cholesterol, testosterone, DHT, and E2 all have a four-carbon ring structures, three 6-membered (or hex-type) and one 5-membered (or pent-type) rings, that differ in their degree of saturation (i.e. number of hydrogen groups) and placement of the carbon-carbon double bonds. Testosterone, DHT, and E2 also differ in and placement of hydroxyl (OH) and/or keto (C=O) groups. As described, the number and placement of groups with carbon-carbon double bonds, hydroxyl groups, keto groups, and other groups (e.g. chlorine, bromine, etc.) are rather easily changed if appropriate catalysts are present in very small amounts and/or hex-or pent-ringed structures are heated or otherwise energized such as, for example, by UV light.

Many cells contain sex hormone receptors with binding sites that interact with natural (endogenous) or exogenous (xenobiotic) endocrine disruptive substances at very low concentrations to activate (or block) a receptor-induced response. For example, the concentration of an agonist substance that produces 50% of the maximum response of the receptor to that substance, called the EC50, or the concentration of a substance that inhibits 50% of the maximum receptor response of a standard agonist to that substance, called the IC50, typically ranges from 10-⁶ to 10-¹³ M.

The Endocrine Disruptor Screening and Testing Advisory Committee (EDSTAC), a federal advisory committee formed in 1996 to make recommendations to the U.S. Environmental Protection Agency on how to develop the endocrine disruptor screening and testing program called for by Congress, and the Interagency Coordinating Committee on the Validation of Alternative Methods (ICCVAM), a group responsible for approving test methods that do not use animals, and recommending them to government agencies, have issued mandates to regulate the presence of xenobiotic (exogenous) chemicals having estrogenic activity, anti-estrogenic activity, androgenic activity, or anti-androgenic activity that might be consumed by humans or released into the environment.

### General Description of Endocrine Disruptors

Many chemicals described as endocrine disruptors are used in the manufacture of various products. These chemicals act as agonists or antagonists of androgenic or estrogenic sex hormones - or other hormones such as thyroid hormones that are much less well studied. Such endocrine disruptors can act by binding to naturally occurring receptors to modify their functioning, production, synthesis, or breakdown. Substances that induce a sex-hormone-like response are called agonists and those that block hormone action are called antagonists.

### General Description of Endrogenic Activity

The most common endocrine disruptive effects of sex hormones are estrogenic affects. However, anti-estrogenic effects, androgenic effects, and anti-androgenic effects are not uncommon. Endocrine disruptors of sex hormones can produce abnormal physical and/or behavioral effects ranging from increased risk of hypospadias, cryptorchidism, and vaginal carcinoma, to impaired mental development, particularly when exposure occurs during critical stages of development, from early fetal stages through puberty. Estrogenic endocrine disruptors can produce fetal pathophysiologies, abnormal brain maturation or activities, reduced sperm counts, immune responses, prostate enlargements, ovarian and uterine dysfunctions, learning disabilities, and disorders of attention, motivation, emotion, and cognitive development, including changes in sexual orientation.

*In vivo* data from mice and rats have shown that exposure to estrogenic endocrine disruptors at various developmental stages is associated with alterations in the reproductive organs of infants and adults, the rate of growth and time to sexual maturation, and aggressive behavior. Such estrogenic endocrine disruptive effects can be either gross or subtle when tested in animals. Similar estrogenic and androgenic endocrine disruptive effects are almost certainly produced in humans, since basic endocrine mechanisms of sex hormones have been highly conserved across all classes of vertebrates.

### Mechanism for Estrogenic Activity and Anti-Estrogenic Activity

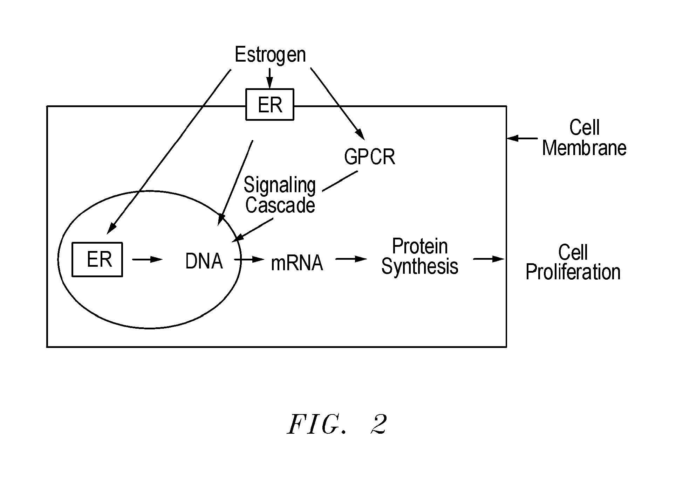

The mechanisms of estrogenic and anti-estrogenic endocrine disruptors are shared with natural estrogens. Synthetic endocrine disruptors present in the environment mimic endogenous hormonal activity by affecting the actions of the estrogen receptors and other members of the nuclear receptor superfamily. Estrogen receptor-α (ER-a) and estrogen receptor-β (ER-β) are promiscuous receptors. In other words, ER-α and ER-β can bind a wide variety of natural and synthetic endocrine disruptive chemicals to activate transcription of estrogen-responsive genes, leading to cell proliferation as depicted in FIG. 2. Chemicals having estrogenic activity bind to ER-α and ER-β receptors to induce conformational changes that allow estrogen receptors to proceed from inactive proteins to active transcriptional regulators that induce transcription of estrogen responsive genes. Anti-estrogenic activity effects may be produced, in theory, by competitive inhibitors that bind to estrogen receptors but do not activate them; or agonists that bind strongly to estrogen receptors, but do not activate as strong an estrogenic response. Furthermore, selective estrogen receptors modulators (SERMs) bind to estrogen receptors, but subsequently activate cellular responses that differ from those activated by estradiol (E2), the endogenous estrogen. It might also be possible for a chemical to bind directly to endogenous E2 or other estrogenic hormones, and thereby reduce their effects. However, most chemicals that bind to estrogen receptors produce some effect on estrogen receptor activation, either estrogenic, anti-estrogenic, or as SERMs

### General Description of Androgenic Activity

Androgens are important hormones for expression of the male phenotype. They not only have characteristic roles during male sexual differentiation, but also during development and maintenance of secondary male characteristics and during initiation and maintenance of spermatogenesis. The two most important androgens are testosterone and 5a-dihydrotestosterone (DHT). While acting through the same androgen receptor, testosterone and DHT have specific roles during male sexual differentiation: testosterone is directly involved in the development and differentiation of Wolffian-duct-derived structures (e.g. epididymas, vas deferens, seminal vesicles and ejaculatory ducts), whereas DHT, a metabolite of testosterone, is the active ligand in a number of other androgen target tissues such as, for example, the urogenital sinus and tubercle and their derived structures (e.g. prostate gland, scrotum, urethra, penis).

Testosterone and DHT have different interactions with the androgen receptor. Testosterone has a two-fold lower affinity than DHT for the androgen receptor; the dissociation rate of testosterone from the receptor is five-fold faster than DHT. However, testosterone can compensate for its "weaker" androgenic potency during sexual differentiation and development of Wolffian-duct structures via high local concentrations due to diffusion from the nearby testis. In more distally located structures, like the urogenital sinus and urogenital tubercle, the testosterone signal is amplified via conversion to DHT.

### Mechanism for Androgenic Activity

The effects of testosterone in humans and other vertebrate primarily occur by two mechanisms: (1) activation of the androgen receptor (directly or as DHT), and (2) conversion to estradiol and activation of estrogen receptors. Free testosterone is transported into the cytoplasm of target tissue cells, where it can bind to the androgen receptor, or can be reduced to DHT by the cytoplasmic enzyme 5α-reductase. DHT binds to the same androgen receptor even more strongly than testosterone, so that its androgenic potency is about 2.5 times that of testosterone. As also occurs for an estrogen receptor-receptor complex, the testosterone ― androgen receptor-receptor or DHT-receptor complex undergoes a structural change that allows it to move into the cell nucleus and bind directly to specific nucleotide sequences of chromosomal DNA. These binding areas are called hormone response elements (HREs), and influence transcriptional activity of certain genes, producing the androgenic effects.

Like estrogen receptors, androgen receptors occur in many different tissues in and both males and females. Greatly differing systemic and/or local tissue concentrations of testosterone and/or DHT prenatally, at puberty, and throughout life account for most of the biological differences between males and females. The bones and the brain are two important tissues in humans where the primary effect of testosterone is by way of aromatization to an estrogen, estradiol. In the bones of both males and females, estradiol accelerates maturation of cartilage into bone, leading to closure of the epiphyses and conclusion of growth. In the central nervous system, testosterone is also aromatized to estradiol and serves as the most important feedback signal to the hypothalamus (especially affecting LH secretion). In many mammals, prenatal or perinatal "masculinization" of the sexually dimorphic areas of the brain by estradiol derived from testosterone programs later male sexual behavior.

In general, androgens promote protein synthesis and growth of those tissues with androgen receptors. Testosterone effects are often classified as *virilizing* or *anabolic,* although the distinction is often unclear, as testosterone often produces a mixture of both effects. Anabolic effects classically include growth of muscle mass and strength, increased bone density and strength, and stimulation of linear growth and bone maturation. Virilizing prenatal effects classically include maturation of the sex organs, particularly the penis and the formation of the scrotum in fetuses; postnatal (usually at puberty) effects classically include deepening of the voice, beard growth and auxiliary hair. Many of these postnatal testosterone effects are categorized as male secondary sex characteristics.

Note that many endogenous and exogenous substances bind and activate (or block) estrogen receptors or androgen receptors at very low EC50 or IC50 concentrations of 10⁻⁶ to 10⁻³ M and estrogenic activity or androgen activity threshold concentrations as low as 10⁻¹⁵ M. Chemicals that activate or block the estrogen receptors and androgen receptors are said to contain estrogenic activity, anti-estrogenic activity, androgenic activity, or anti-androgenic activity, respectively, and typically contain a cyclo-hex ring (e.g., hexane, hexene, benzene, azine, diazine, triazine rings) and one or more hydroxyl, keto, chloride, or bromide groups.

### Federal Regulation of Endocrine Disruptors

Experimental data from *in vitro, in vivo,* ecological, and epidemiological studies showing that particular chemicals or chemical formulations possess varying degrees of endocrine disruptive activity have elicited concern from governmental bodies (including EDSTAC and ICCVAM), commercial entities, non-profit organizations, and scientific panels. In response to concerns about endocrine disruptive effects of chemicals on humans and wildlife, the U.S. Congress passed amendments to the Food Quality Protection Act in 1996 and the Safe Drinking Water Act in 1996 that require chemicals be tested for endocrine disruptive activity, with particular attention given to endocrine activity. To accomplish this goal, the EPA formed EDSTAC to examine whether current toxicological testing procedures are adequate to determine endocrine disruptive activity.

### Use of Additives and Monomers in Plastics

Many cyclohexanes, cyclohexenes, benzenes, triazines, and other hex-ringed structures are rather easily transformed under conditions used to make plastic and other polymers (e.g. silicones, rubber, etc), process (e.g. heat) foodstuffs, or manufacture paper. Furthermore, it is not that difficult to add hydroxl, chlorine, bromide, nitrogen and other groups to hexane, hexene and/or benzene rings under conditions used to make plastic and other polymers, process foodstuffs, or manufacture paper. That is, the number and placement of C=C, hydroxyl, keto, and other groups (e.g., chlorine, bromine, etc.) in hex-rings are rather easily transformed in exogenous (xenobiotic) endocrine disruptive chemicals if appropriate catalysts are present in very small amounts and/or hex-or pent-ringed structures are heated or otherwise energized such as, for example, with UV light. Very low concentrations of such contaminant substances produced under such conditions may have dramatic adverse biological effects because many cells contain sex hormone receptors with binding sites that interact with natural (endogenous) or exogenous (xenobiotic) substances at very low concentrations (EC50s or IC50s of 10⁻⁶ to 10⁻¹³ M) to activate (or block) an estrogen receptor

Plastics and other polymer products are made by polymerizing a specific monomer with smaller quantities of various additives such as antioxidants, plasticizers, slip agents, clarifiers, thermal stabilizers, light stabilizers, colorants, etc. The exact concentrations of monomers and various additives is called a plastic (or silicone, rubber, etc) formulation and is usually proprietary information. Typically, monomers and additives are made by a few large chemical companies who sell to manufacturers that use proprietary formulas to make products.

To reliably produce an acceptable polymer-based product, all chemicals used to manufacture such products should be free of estrogenic activity, anti-estrogenic activity, androgenic activity, anti-androgenic activity and other hormones --- and should not produce such hormonal activity during the manufacturing process or during normal product use. In the following pages, plastic polymers will be used as a specific example of general problems and procedures for all polymer-based products.

### Adverse Biological Results Produced by Currently Available Polymer Products

Chemicals such as those described above having hormonal activities (estrogenic activity being by far the most common) readily leach from plastics and other polymer products used to make baby products, containers for food, microwaveable items, etc. Given the ubiquity of plastic items, the leaching of monomers and additives with estrogenic activity and other hormonal activity from plastics in their normal daily use almost certainly contribute to deleterious hormonal effects on human health throughout development, beginning prenatally and continuing through puberty and into adulthood. Hormonally active chemicals and changes in hormonal activity often have much more dramatic effects on developing than adult organisms. For example, recent data show that levels of bisphenol A in human umbilical cords are 0.2 - 2 µg/kg --- exposure consistent with levels of bisphenol A reported to leach from can linings into vegetable products eaten by babies and plastic baby bottles. Specifically, a typical daily intake of 700ml of formula containing 5ppb bisphenol A from a baby bottle by a 7kg baby would amount to a daily dose of 0.5µg/kg/day -- and deleterious developmental changes have been reported in snails, fish, frogs, and rodents at 0.5 - 2µg/kg/day. While it is highly unlikely that randomized trials to directly examine the deleterious developmental effects of bisphenol A will ever be performed on human infants, such deleterious effects are likely produced in humans, since basic endocrine mechanisms are not markedly different in rodents and humans.

### Description of plastic Monomers and Additives

A plastic is any one of a large and varied group of materials consisting wholly or in part of combinations of carbon with oxygen, hydrogen, nitrogen, and other organic and inorganic elements. These elements are combined to make a substance having large molecular weight, which while solid in a finished state, is made liquid at some stage in its processing and is thus capable of being formed into various shapes, usually through the application of heat and/or pressure. Plastic products are found in nearly every conceivable aspect of modem life.

Plastics are made from monomers that are synthesized into polymers, typically by the application of heat, pressure, and assisted by catalysts. The most common monomers from which plastics are made are given in Table P-1. Table P-1 also shows the approximate use of such plastics in the United States market. Due to a polymer-reliant domestic market for packaging, appliances, and transportation, the United States has the largest plastics market in the world. In 1996, the production of plastics in the United States neared 87 billion pounds, was over 125 billion in 2000, and over 200 billion in 2005. Some 5-10 chemical manufacturers currently synthesize over 95% of all plastic monomers and most of the commonly used additives worldwide --- and therefore have a large financial stake in formulations in current use.

**Table P-1. 1996 Domestic Production of Plastics**

| **Monomer** | **Polymer** | **Acronym** | **Production (billion lbs.)** | **Percent** | **Monomer exhibits (EA) or Carcinogenic (CA) activity** |
|---|---|---|---|---|---|
| Ethylene | Polyethylene ¹ | PE² (LDPE, HDPE, LLDPE | 26 | 32 | No |
| Vinylchloride | Polyvinylchloride | PVC | 12 | 15 | CA |
| Propylene | Polypropylene | PP | 11 | 13 | No |
| Styrene | Polystyrene | PS | 6 | 7 | EA |
| Bisphenol A | Polycarbonates^{1,3} (Epoxy, Polysulfone, Phenoxy, etc Polymers) | PC | 4 | 5 | EA |
| Terephthalic acethylene glycol | Polyethylene³ terephthalate | PET | | | EA |

| | | | | | |
|---|---|---|---|---|---|
| Sources: EDSTAC, 1998; NRC, 1999; Society for Plastics Industry; 1. Polymer can be formulated to produce plastics with vastly different characteristics. 2. PE can be synthesized into low-density PE (LDPE), high-density polyethylene (HDPE), and linear low-density PE (LLDPE). 3. Monomers are incompletely polymerized and may migrate out of the final plastic product. | | | | | |

Polyethylene is still a heavily produced plastic (25% of market in 2000; 20% in 2005) because its varied forms are inexpensive to synthesize and/or have versatile properties. Low density polyethylene (LDPE) and linear low density polyethylene (LLDPE) account for roughly half the annual total polyethylene production, and most of that production goes into blown and extruded film materials. A substantial portion of this film production is used to wrap food products. The remaining half is high density polyethylene (HDPE) that also mostly finds applications in film, plastic bottles, and plastic pipe: applications that involve contact with either food products or potable water. The applications of polypropylene, polystyrene, polyvinyl chloride, and polycarbonate are similarly distributed. For example, many plastic containers for carbonated beverages are now made of polyethylene terephthalate (PET), an excellent barrier material against the migration of carbon dioxide from the container. Bisphenol A is a monomer used to synthesize various plastics such as PCs, epoxy, phenoxy, and polysulfone polymers (Table P-1) and is released in significant amounts when the polymer is exposed to water (especially when heated). PC plastics synthesized from bisphenol A, which has deleterious estrogenic activity, are now very commonly used for food and beverage containers, baby bottles, baby toys, microwaveable containers, and medical items because polycarbonate plastics exhibit excellent impact strength, toughness, heat resistance, optical clarity and ease of fabrication. Since 1996, polycarbonate production has rapidly increased to reach 15% market share in 2000 and about 30% in 2005; bisphenol A is now one of the top 50 chemicals produced in the US.

Monomers used to make various plastics often exhibit deleterious estrogenic activity (e.g., bisphenol A, terephthalic acid) and or other toxic effects (e.g., vinylchloride). Monomers are described herein that should have or lack hormonal activity inherently and/or after heating, UV exposure or other stresses. Because the polymerization process is usually not complete, unpolymerized monomers with estrogenic activity that migrate out of plastics can readily produce deleterious estrogenic, androgenic, other hormonal, toxic or carcinogenic effects in humans and other species. Although the degradation products of polyethylene has not yet been systematically examined for estrogenic activity, the present invention provides that polyethylene polymers and the ethylene monomer have no known estrogenic activity or other deleterious effects. Furthermore, various polyethylene forms are very versatile with properties ranging from "hard and compliant" to "soft and compliant", depending on the polymerization process employed. Polypropylene is another common monomer that should lack estrogenic activity, anti-estrogenic activity, androgenic activity, Anti-estrogenic activity, and other hormonal activity. Plastics made from polypropylene should also lack estrogenic activity and other hormonal activity according to the present invention presented in, if all additives also lack estrogenic activity and other hormonal activity.

Monomers that should lack estrogenic activity and other hormonal activity as determined, include polyethylene, polypropylene, poly(decamethylene carboxamide), poly(hcxamethylene adipamide), poly(hexamethylene sebacamide), poly(nonamethylene urea), polycaprolactam, poly(butylene glycol), poly(epichlorohydrin), urea), polycaprolactam, poly(butylene glycol), poly(epichlorohydrin), poly(epichlorohydrin-ethylene oxide), poly(ethylene oxide), polyformaldehyde (carcinogenic and toxic effects), nitroso rubber, poly(tetramethylene oxide), polyimines, most inorganic polymers, polyurea-formaldehyde (likely to have unacceptable carcinogenic and toxic effects), polysaccharides, polyurethane, most polyvinyl and polyolefin compounds, polyacetylene, and most polyacids made from short carbon chains lacking ringed structures.

### Additives

Additives are chemicals that are introduced after synthesis of plastics to enhance their properties. For example, antioxidants are added to increase the useful life of polyethylene and other plastics by preventing, or at least minimizing, their degradation by oxygen. The absorption of oxygen by a polymer often causes breakage of molecular chains (chain scission) which leads to other undesirable effects such as discoloration, loss of surface gloss, surface cracking, and lowering of tensile strength. Furthermore, plastics are typically processed into useful shapes at temperatures in excess of 150 °C, a situation that can lead to thermo-oxidative degradation of molecular weight, ductility, and strength. Table P-2 lists some common antioxidants. Almost all of these antioxidants, except possibly organo-phosphites and thio-ethers, have estrogenic, carcinogenic or other toxic effects as predicted. The oldest and most common antioxidants that are deemed suitable for food contact service belong to a class of materials known as hindered phenols.

The most ubiquitous of hindered phenols used as an antioxidant is BHT (Table P-2). Since 1949, BHT has been widely used as an antioxidant food additive in edible fats, oils, and fat-containing foods and cosmetics, in addition to plastics, in large part because it is very inexpensive and assumed to be non-toxic. BHT works by intercepting and reducing free radicals that are associated with the oxidation process. However, BHT has estrogenic activity, as would be predicted utilizing the methods described herein. BHT has also been reported to have other toxic activity. BHT is therefore almost certainly unsuitable as an antioxidant in plastics, given its estrogenic activity and very high mobility. Most antioxidants currently on the market have estrogenic activity or other hormonal activity in their original formula or are easily transformed into chemicals with hormonal activity as predicted herein.

**Table P-2. Some Common Antioxidants used in Plastic Formulations**

| **Antioxidants** | **Estrogenic Activity** | **Carcinogenic or Other Toxic Effects** |
|---|---|---|
| (di)Butyl hydroxy toluene (BHT) | Yes | Yes |
| Hindered Phenols | Yes | ? |
| Organo-Phosphites | Many No | ? |
| Thio-esters | Most No | ? |
| 2° Acrylamines | Most Yes | Yes |

**Table P-3. Some Common Pigments used in Plastic Formulations**

| **Pigments** | **Estrogenic Activity** | **Carcinogenic or Other Toxic Effects** |
|---|---|---|
| Lead chromate | No | Yes |
| Lead molybdate | No | Yes |
| Lead sulphterange | No | Yes |
| Chromium oxides | No | Yes |
| Ferric amonimum | No | Yes |
| Ferrocyanide | No | Yes |
| Carbon black | No | No |
| Phthalo blues | Yes | Yes |

**Table P-4. Some Common Stabilizers used in Plastic Formulations**

| **Stablilizers** | **Estrogenic Activity** | **Carcinogenic or Other Toxic Effects** |
|---|---|---|
| Barium-cadmium soaps | No | Yes |
| Organo-tin compounds | No | No |
| Lead compounds | No | Yes |
| Cadmium-zinc soaps | No | Yes |
| Benzothiazoles | Yes | |
| Benzophenones | Yes | |

Depending on the material and its preferred use, additives other than antioxidants are also often used. For example, various pigments such as those shown in Table P-3, including lead chromates, lead molybdates, lead sulphteranges, chromium oxides, ferric amonimum ferrocyanide, carbon black, phthalo blues, etc. are used to add color to polyethylene and other polymers. Many of these pigments have estrogenic activity as predicted herein, or other toxic effects. Other classes of additives include plasticizers and stabilizers such as those shown in Table P-4. When added to polymers, plasticizers produce plastic products that are flexible. For example, the most ubiquitous plasticizers for PVC compounds are probably esters of phthalic acid -- all of which have estrogenic activity as predicted herein and are in high concentration, often 4-8% by weight of the plastic. Since most plasticizers are quite mobile at ambient conditions and are commonly used in child-oriented products made of PVC, children who "taste" their surroundings often ingest significant amounts of these compounds. Since polyethylenes are usually rather flexible, plasticizers are usually not added. Stabilizers on the other hand, inhibit or reduce damage caused by electromagnetic radiation (e.g., heat, light and etc) to polyethylenes and other polymers. Thermal stabilizers for PVC include barium-cadmium soaps, organo-tin compounds, lead compounds, and cadmium-zinc soap. Additives that contain lead and cadmium are clearly toxic. Many of the most common UV stabilizers for polyethylene such as benzothiazoles, and benzophenones have estrogenic activity as predicted herein and have rather low molecular weight. Such low molecular weight (≤1000 Daltons) stabilizers are routinely added to polyethylene, polypropylene, and other polymer plastics and are sufficiently mobile to migrate by diffusion from the plastic to the environment.

### Federal Regulations of Plastic

Due to Federal regulations and commercial concerns, most monomers or additives with carcinogenic or other lethally toxic effects (Tables P2-4) are not found in plastics routinely contacted by humans or that contact food. The FDA has long recognized the problem of migration of chemicals (monomers and additives) out of plastics and other products and has strictly regulated the antioxidants and other agents in plastic compounds that contact food. The FDA has required that such additives be tested for carcinogenicity and other acute toxic effects. Less toxic stabilizers such as tin soaps are approved by the FDA for food contact, but less expensive, albeit toxic, stabilizers (barium, cadmium, and lead compounds) are approved for use in other applications such as electronics parts that do not contact food. Unlike FDA regulations for carcinogenicity or other types of toxicity, the FDA has not issued regulations for acceptable levels of estrogenic or other hormonal activity for monomers, polymers, or additives that contact foodstuffs.

### Food Additives

The Food Quality Protection Act requires that chemicals be tested and regulated for endocrine disruptive (including estrogenic) activity. The current need for, and eventual regulation of, safer plastics with less effects on human health has been driven by well-documented scientific findings of medically unacceptable endocrine disruptive activity in plastics leading public concern_{.}

Regulations or consumer concerns in other developed countries are now affecting the United States. That is, a few U.S. products have changed drastically in response to commercial and public alarm even though no formal regulatory action was ever taken by any U.S. federal agency. As one example, European Union countries recently banned the use of phthalates and PVC plastics in toys for children under the age of three. Consequently, plastic baby bottles or teething rings in Europe no longer contain phthalates. Many baby products are also no longer made from PVC in Japan and the U.S. due to concerns by the public and commercial retailers (e.g., Toys 'R US and Babies 'R Us), but NOT the manufacturers of chemicals, about the deleterious health effects of phthalates and PVC. As a second example, the use of many polycarbonate products (e.g., baby bottles and dishes) has recently decreased dramatically in Japan due to public awareness that these polycarbonates release bisphenol A whose estrogenic activity has potentially deleterious effects on reproductive functions and many other physiolobical systems in humans. However, almost all of the additives substituted for phthalates or bisphenol A have estrogenic activity; in many cases that activity is higher than the phthalates or bisphenol A that they replace. Furthermore, many other products that contact foodstuffs used by humans, including babies, contain phthalates in Europe, Japan and the US.

More than 2,800 different food additives are routinely used to maintain product freshness and quality and help retard physical, chemical and biological deterioration. Table A-1 lists some commonly used food additives and their intended function. Antioxidants are one of the most important and most widely used food additives. Based on their function, food antioxidants are classified as primary antioxidants (prevent oxidation even when used alone), synergists, or secondary antioxidants (compounds that maintain or enhance the activity of primary antioxidants). Primary antioxidants possess variable degrees of efficacy in food systems due to many factors, including oxidation-reduction potential, extent of chemical degradation, physical loss and solubility properties within the food matrix. Mixtures of differing antioxidants often exhibit greater protection to oxidation, sometimes because synergistic actions regenerate the most reactive antioxidant.

Table A-2 lists 12 common antioxidants. Some (BHA, BHT, Tocopherols, TBHQ, Gallates, THBP, #1-6) are the most commonly used antioxidants. Others are (#7-12) "natural" antioxidants isolated from plants, although they are less commonly used in the manufacture of food products at present. Most synthetic or natural antioxidants contain phenolic rings — or benzene rings that can be converted to phenolic or chlorinated rings when heated in the presence of various common substances (water, table salt) by processes described herein. Some of these natural antioxidants, carnosine (#11), glycyrrhizic acid (#12) lack benzene phenolic rings which often interact with ERs.

Given their ubiquity, food antioxidants and other food additives with estrogenic activity (and possibly androgenic activity and other hormonal activity) almost certainly contribute to harmful hormonal effects on humans, especially during fetal stages and continuing through puberty. Although no directly comparable data yet exist for food additives, recent data for plastics show that levels of bisphenol A in human umbilical cords are 0.2 - 2 µg/kg. These levels are consistent with levels of bisphenol A reported to leach from can linings into vegetable products and from plastic baby bottles, as well as levels of BHA and BHT in foodstuffs. BHA, BHT, and Bisphenol A have similar RBAs of -4 to -5. Specifically, a typical daily intake by a 7kg baby of 700ml of formula containing 5ppb bisphenol A leached from a baby bottle would amount to a daily dose of 0.5 µg/kg/day. This is alarming since developmental changes have been reported in snails, fish, and rodents at 0.5 - 2µg/kg/day of Bisphenol A.

The estrogenic activity, androgenic activity or other hormonal activity of food antioxidants has not yet been examined by FDA and others, but many food antioxidants would be expected to exhibit estrogenic activity because they contain a phenolic ring. Since many estrogenic chemicals have effects at picomolar to nanomolar levels and antioxidants are often added to foodstuffs in micromolar to millimolar concentrations (1000X greater, see Table A-2), such estrogenic antioxidants could be a significant health hazard, particularly to the developing fetus. For the 12 antioxidants in Table A-2, antioxidants, #1-4, BHA, BHT, Tocopherols, TBHQ are hindered phenols, #5&6, Propyl gallate, THBP are phenols and #7-12, curcumin, catechin, sesamin, sesamolin, carnosine, glycyrrhizic acids are natural antioxidants, of which #7&8 contain a phenolic ring, #9&10 contain benzene rings, and # 11 & 12 contain neither benzene nor phenolic rings (but do contain -OH groups). Table A-2 gives the prediction of estrogenic activity/androgenic activity (yes, no) based on considerations described for these 12 antioxidants. Only carnosine and glycerrhic acid contain no hex-carbon rings and hence would not be expected to have estrogenic activity/androgenic activity —or easily transform into chemicals having estrogenic activity/androgenic activity in cooking conditions. Another acceptable food additive lacking a phenolic ring might be ethoxyquin. However, ethoxyquin has significant cellular toxicity.

**Table A-1 Commonly Used Food Additives and Intended Function**

| **Additive** | **Intended function** | **Examples** |
|---|---|---|
| Antimicrobial preservatives | Prevent microbial growth | Sodium benzoate, calcium propionate, potassium sorbate, sodium nitrite |
| Antioxidants | Prevent rancidity | BHT, BHA, propyl gallate, tocopherols |
| Flavor enhancers | Supplement, enhance or modify original flavor | MSG, disodium inosinate, disodium guanylate |
| Synergists | Increase the effects of other food additives | Citric acid, tricalcium phosphate and other phosphates, ascorbic acid |

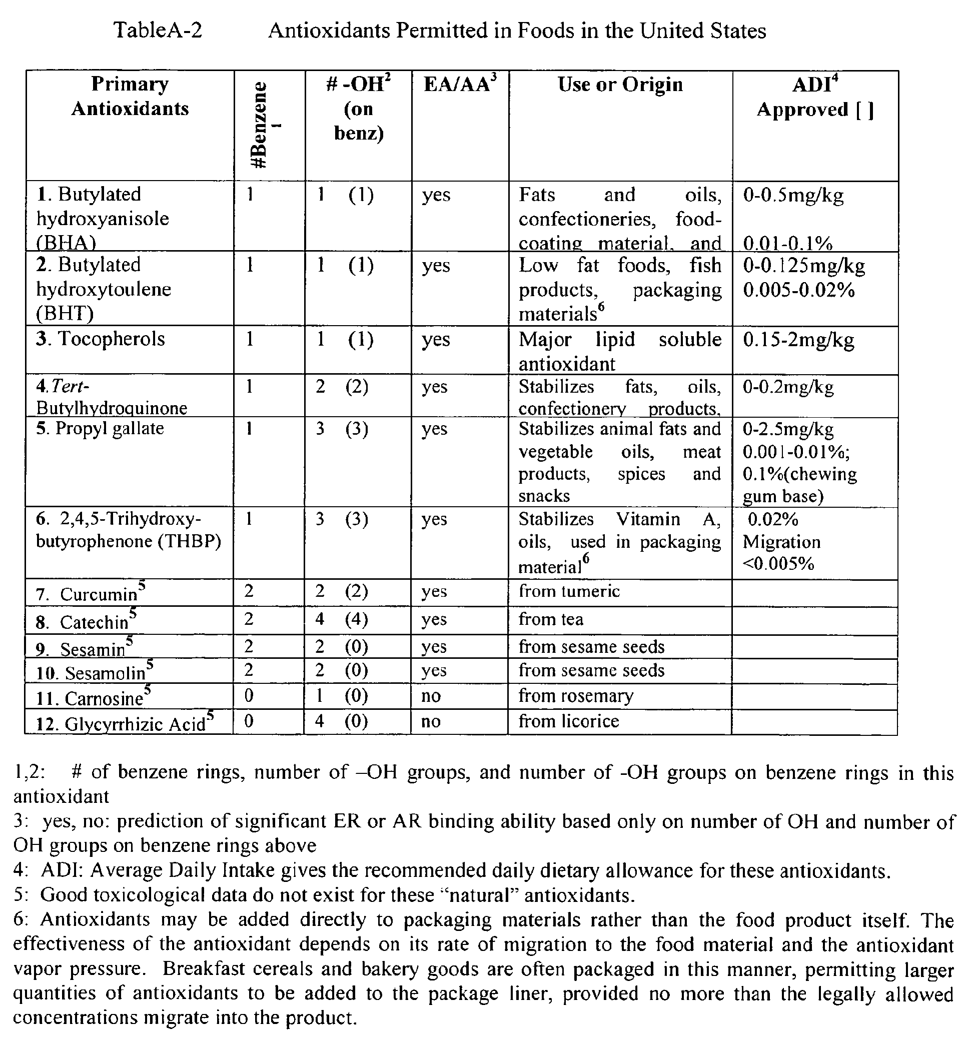

It should be noted that many plants contain antioxidants called flavonoids responsible for the colors of fruits (e.g. the red or blue of grape and berry skins) and vegetables. Twelve basic classes (chemical types) of flavonoids have been recognized: flavones, isoflavones, flavans, flavanones, flavanols, flavanolols, anthocyanidins, catechins (including proanthocyanidins), leukoanthocyanidins, chalcones dihydrochalcones, and aurones. Anthocyanidins and closely related flavonoids such as proanthocyanidins may collectively be referred to as anthocyanosides. Many flavonoid antioxidants would be expected to have estrogenic activity or other sex hormonal activity according to the present invention, i.e. they often have one of the traits of chemicals with estrogenic activity, a hex-ringed structures with hydroxyl or C=O groups. Such flavonoids are termed phytoestrogens, although not all phytoestrogens are flavonoids.

Lemons (outer skin and white pith), and the central white core of citrus fruit generally, are a particularly rich source of flavonoids. The white pith of green peppers is also rich in flavonoids, as is the skin of colorful berries and grapes. Some herbs (such as *Ginkgo biloba*) are taken partly for the action of their flavonoids.

### Federal Regulation of Food Antioxidants

For many decades, additives to foodstuffs have been federally regulated for carcinogenic or other lethally toxic effects (Federal Food, Drug, and Cosmetics Act, 1936; Food Additives Amendment, 1958; etc). Antioxidants are food additives regulated in the United States under the Federal Food Drug and Cosmetic Act Title 21 of the Code of Federal Regulations. In meat and poultry products, antioxidants are regulated under the Meat Inspection Act and the Poultry Inspection Act. The provisions of these acts state that food additive substances may be safely used under conditions of good manufacturing practice, defined to include the following restrictions:
**(1)** The quantity of the substance added to food does not exceed the amount reasonably required to accomplish its intended physical, nutritive, or other technical effect in food.
(2) The quantity of a substance that becomes a component of food as a result of its use in the manufacturing, processing, or packaging of food, shall be reduced to the extent reasonably possible.
(3) The substance is of appropriate food grade and is prepared and handled as a food ingredient.

The FDA recognizes that food antioxidants can be added at variously specified levels in accordance with good manufacturing processes. For example, ascorbyl palmitate and tocopherol acetate are lipid soluble antioxidants, and tocopherols are permitted at 0.002% of lipid in infant formula and 0.03% of total lipid in shellfish. Others are allowable at much higher levels, (given their large molecular mass) such as gum guaiac permitted at 0.1%. Some synergists, e.g., citric, tartaric and thiodiproprionic acid, do not have a set limit. The FDA does not yet regulate antioxidants or other food additives for levels of estrogenic or other hormonal activity.

### SUMMARY OF THE INVENTION

The present invention relates, generally, to the field of plastics and, more specifically, to plastic materials and food additives that are substantially free of endocrine disruptive chemicals. Chemicals are generally not acceptable for use in the production of plastics which are intended to be free from endocrine disruptive activity if those chemicals have molecular weights between 90 and 1000 daltons and have a five or six member carbon or nitrogen ring, do not have protrusions that prevent interactions with the ligand binding site of the estrogen and androgen receptor, and have one or more of the following properties:
For androgenic activity: two anchor points corresponding to the 3-keto and 17β-hydroxyl groups on DHT; trifluoromethyl and methyl groups such as those adjacent to the nitro group in flutamide and fenitrothion; a hydrogen-bond acceptor or donor group at the position corresponding to the 17β-OH group of DHT; a 10 angstrom distance between the hydrogen bonding and electrostatic interaction groups corresponding to the 3-keto and 17β-OH groups in DHT; and
For endrogenic activity: a benzene ring with hydoxyl, chloride, or bromide groups; an H-bond donor mimicking the l7α-OH of 17β-estradiol; a spacing of 9 - 13 between two -OH groups at either end of a planar, and primarily hydrophobic, chemical; steric hydrophobic centers mimicking 7α and 11β steric configuration of 17α-estradiol.

Chemicals generally are acceptable for use in the production of plastics which are intended to be free from endocrine disruptive activity if those chemicals have molecular weights between 90 and 1000 daltons and do not possess any of the properties described in the androgenic activity and endrogenic activity subparagraphs above.

It should be noted that, even if a chemical that with a molecular weight greater than 1000 daltons is determined to be acceptable for use in the production of plastics which are intended to be free from endocrine disruptive activity, it may subsequently become unacceptable if it properties are altered or modified, such as, for example, the molecular weight is reduced as a result of the loss of one or more side chains and the chemical possesses one or more of the characteristics enumerated above.

The chemicals with the acceptable characteristics listed above that do not allow for their binding to the estrogen or androgen receptors may be combined with certain plastics or food products to create products that are substantially free of endocrine disruptive chemicals and are therefore useful in products and applications where no endocrine disruptive effects are desired.

### BRIEF DESCRIPTION OF THE DRAWINGS

Figure 1 is a depiction of the synthesis of estrogens or androgens from cholesterol.

Figure 2 is a depiction of the binding of endocrine disruptive chemicals to activate transcription of estrogen-responsive genes leading to cell proliferation.

### DETAILED DESCRIPTION OF THE INVENTION

The present invention relates to the identification and use of monomers and additives in materials that are free from endocrine disruptive activity. Where the term "plastics" is used herein, it should be appreciated that the present invention is equally applicable to other materials or products that are made with monomers or additives. Accordingly, the words, "silicone," "rubber," and other materials can be substituted for the term "plastic" when used herein.

The acceptability or unacceptability of a chemical or product described herein is defined in terms of its ability to activate or inhibit the estrogen receptors or androgen receptors; an acceptable chemical or product is acceptable for lack of estrogen receptor/androgen receptor activation (endocrine disruptive properties) might be unacceptable for general use due to carcinogenic, toxic, or other adverse biological properties. Conversely, a chemical or product designated as not acceptable due to its estrogenic activity, androgenic activity, or other hormonal activity might not have other adverse biological properties. The ability to activate or inhibit the estrogen receptor and/or androgen receptor is defined by the results of sensitive, reliable and valid in vivo or in vivo assays, such as the MCF-7 cell proliferation assay.

While binding affinities for the two types of estrogen receptors (ER-α and ER-β) differ among estrogenic ligands, endogenous and exogenous estrogen receptor ligands typically bind to both receptors. Both estrogen receptor types activate estrogen response elements, which are located upstream of the promoter regions of estrogen-activated genes. Chemicals with estrogenic activity or anti-estrogenic activity can bind to nuclear or extranuclear receptors.

There are a number of physical and chemical properties of endogenous and exogenous chemicals that affect the ability of a chemical to bind to an estrogen or androgen receptor. For example, the following properties of a chemical affect its binding ability:
- Molecular weight. A molecular weight of 90 or 160 daltons is probably the lowest limit for a xenobiotic to bind to the estrogen or androgen receptor, respectively, whereas 1000 or 800 daltons is probably the upper limit of estrogen or androgen receptor binding, respectively. Compounds with molecular weights greater than 800 - 1000 daltons are less mobile and, most importantly, do not bind to ER-α or ER-β or the androgen receptor. That is, chemicals that are significantly smaller or larger than estrogen or andogen receptor binding ligands do not bind to the estrogen or androgen receptors. However, chemicals larger than the 800-1000 daltons may contain moities that are easily removed. If such degraded chemicals contain properties listed below, then such degradation products can bind to the estrogen or androgen receptor.
- Presence of a hex- or penta- carbon or nitrogen ring structure. If a chemical contains no hex- or penta- carbon or nitrogen ring structure, it is unlikely to be an estrogen or androgen receptor ligand. The androgen ring structure need not be as rigid as that usually required for estrogen receptor binding.
- Hydrophobicity. The optimal log partition coefficient (P) is 4-7 for non-steroidal binding.
- Absence of protrusions that prevent interactions with the ligand binding site of the

### estrogen and androgen receptor.

For androgen receptor binding:
● Presence of two anchor points corresponding to the 3-keto and 17β-hydroxyl groups on DHT. Chemicals lacking these anchor points are much less likely to bind to the androgen receptor.
● Presence of trifluoromethyl and methyl groups such as those adjacent to the nitro group in flutamide and fenitrothion. These groups may induce the interaction with the hydrophobic pocket and thereby increase androgen receptor binding.
● Absence of protrusions that prevent interactions with the ligand-binding cavity of the estrogen or androgen receptor.
● Presence of an hydrogen-bond acceptor or donor group at the position corresponding to the 17β-OH group of DHT.
● For androgenic receptor agonists, a 10 angstrom distance between the hydrogen bonding and electrostatic interaction groups corresponding to the 3-keto and 17β-OH groups in DHT.
● For androgenic receptor antagonists, a distance substantially greater or less than 10 A° between the hydrogen bonding and electrostatic interaction groups corresponding to the 3-keto and 17β-OH groups.

For estrogen receptor binding
● A benzene ring with an hydroxyl radical (phenol), chloride radical, or bromide radical. The presence of a single phenolic (or hydroxyl triazine) ring is much more significant than any other structural or physical-chemical feature. The 3―OH group acts primarily as H-bond donor, although it can also act as an acceptor. The H-donor ability of the 3-OH group is especially affected by the nature of immediately adjacent (ortho) groups. The H-bond donor ability for several ortho-substituted phenols show the trends: phenol > 2-methylphenol = 2-t-butylphenol > 2,6-dimethylphenol > 2,6-dit-butylphenol, in which 2,6-di-t-butylphenol is not an H-bond donor, consistent with the lack of binding activity observed for 4,4'-methylenebis (2,6-di-t-butylphenol). A chemical with a phenolic structure is likely to bind to ER, but the degree of potency is dependent on the presence of key structural features described in 4-7 below. If a xenobiotic has a benzene ring without an -OH group, it can still bind to the ER, although its binding potential is then heavily dependent on the presence of key structural features described in 6-7 below. Furthermore, OH, Cl, Br and other groups that have appropriate characteristics described in 6-7 below are easily added to hexane, hexene, or benzene rings
● An H-bond donor mimicking the 17α-OH of 17β-estradiol.
● A spacing of 9 ― 13 Å between two -OH groups at either end of a planar, and primarily hydrophobic, chemical. Chemicals containing only one phenolic or chloride group are likely to have weak to medium affinity for the ER. Most strong to medium ER ligands contain two -OH or Cl groups with an O-O distance ranging from 9 to 13 Å.
● Steric hydrophobic centers mimicking 7α and 11β steric configuration of 17α - estradiol. The precise steric size and orientation of the hydrophobic groups is as important as a 17α -OH. Chemicals containing a phenolic ring separated from another benzene ring with 0-3 bridge atoms will most likely be an ER ligand. The volume of the ER ligand-binding pocket (450 Å³) is about twice as that of 17α -estradiol (245 Å³). The length and breadth of the 17β -estradiol skeleton are well matched by the geometry of the ligand binding pocket, but there are large unoccupied cavities at the 7α and 11β -positions of 17β -estradiol. The positions of these cavities allow steric groups of certain sizes to fit, and are of great importance for various xenoestrogens, some of which do not have a benzene ring or OH groups.
● Increased hydrophobicity of the entire chemical. The ligand-binding pocket, determined by X-ray crystallography of ERs, has a 3D "cross"-like shape with center and vertical ends mainly hydrophobic, and polar groups located at opposite ends of the horizontal cavity. When a direct comparison can be made in cases when many of the above properties above are held constant, then increased hydrophobicity usually produces greater ER affinity. Xenoestrogens with groups lacking the most effective 0-0 distance require greater hydrophobicity to attain the same binding affinity exhibited by 17 p-estradiol or xenoestrogens with 3α and 17β -OH groups

Applying the foregoing to the selection of chemicals that are acceptable for use in the production of plastics that are substantially free of endocrine disruptive activities, it is apparent that chemicals are generally not acceptable for use in the production of such plastics if those chemicals have molecular weights between 90 and 1000 daltons, have a five or six member carbon or nitrogen ring, have a hydrophobicity log partition coefficient from approximately 4 to approximately 7, do not have protrusions that prevent interactions with the ligand binding site of the estrogen and androgen receptor, and have one or more of the following properties:
For androgenic activity: two anchor points corresponding to the 3-keto and 17β-hydroxyl groups on DHT; trifluoromethyl and methyl groups such as those adjacent to the nitro group in flutamide all fenitrothion; a hydrogen-bond acceptor or donor group at the position corresponding to the 17β-OH group of DHT; a 10 angstrom distance between the hydrogen bonding and electrostatic interaction groups corresponding to the 3-keto and 17β-OH groups in DHT; and
For endrogenic activity: a benzene ring with one or more hydroxyl, chloride, or bromide groups; an H-bond donor mimicking the 17α-OH of 17β-estradiol; a spacing of 9 ― 13 Å between two -OH groups at either end of a planar, and primarily hydrophobic, chemical; steric hydrophobic centers mimicking 7α and 11 β steric configuration of 17α-estradiol.

Chemicals generally are acceptable for use in the production of plastics which are intended to be free from endocrine disruptive activity if those chemicals have molecular weights between 90 and 1000 daltons and do not possess any of the properties described in the androgenic activity and endrogenic activity subparagraphs above.

It should be noted that, even if a chemical that with a molecular weight greater than 1000 daltons is determined to be acceptable for use in the production of plastics which are intended to be free from endocrine disruptive activity, it may subsequently become unacceptable if it properties are altered or modified, such as, for example, the molecular weight is reduced as a result of the loss of one or more side chains and the chemical possesses one or more of the characteristics enumerated above.

### Examples of Chemicals Identified with Endrogenic and/or Androgenic Properties

Many chemicals with cyclohexane, cyclohexene, benzene, or carbon hex-rings with hydroxl or ketone groups can interact with the estrogen receptors and androgen receptors- as can some ringed structures with chlorine groups or with 1-3 N substituted for 1-3C in an azine or other ringed structure. These chemicals are often found in formulations used to make products from various polymers (plastics, silicones, rubber and various additives), in additives to foodstuffs (antioxidants, colorants, etc), or in paper (wood fibers, emulsifiers, colorants, etc).

Examples of synthetic chemicals shown to have unintended estrogenic activity and/or androgenic activity properties because they bind to estrogen receptors and/or androgen receptors are listed below. Many of these chemicals have a benzene ring (see, items #1-12 below), but some do not (see, e.g., items #13-17 below). One has a hex-ring containing three nitrogen groups (see item #17 below). Some have chlorine groups (see items # 3, 10-17 below), rather than hydroxyl groups. The structures of some of these xenobiotic chemicals having benzene rings (see, e.g. #1-11) and others have rings that are not benzitic (see items #12-17).
1. p-nonylphenol (in PVC products and byproduct from detergents and spermicides)
2. parabens (lotions)
3. phenosulfothiazine
4. phthalates (plastic softener)
5. 4-Methylbenzylidine camphor (4-MBC) (sunscreen lotions)
6. hydroxy-anisole butyrate (food preservation)
7. bisphenol-A (food preservation, plasticizers)
8. DEHP
9. erythrosine, Red Dye No.3
10. DDT (insecticide)
11. Polychlorinated biphenyls,(PCB)s (lubricants, adhesives, paints)
12. methoxychlor (insecticide)
13. endosulfan (insecticide)
14. heptachlor
15. dieldrin
16. kepone
17. atrazine (weed killer)

To produce an acceptable plastic, silicon, rubber or other m, food additive, or paper product—all acceptable chemicals used to produce the product should have no detectable estrogenic activity, anti-estrogenic activity, androgenic activity, anti-androgenic activity, or other hormonal activities — and should NOT easily transform into, or otherwise produce, chemicals that exhibit such detectable activity. As used herein, detectable amounts of estrogenic activity, anti-estrogenic activity, androgenic activity, anti-androgenic activity or other hormonal activities means detectable by a sensitive, reliable, and valid *in vitro* or *in vivo* assays, such as the MCF-7 cell proliferation assay that can detect the estrogenic activity of 17β-estradiol at 10⁻¹⁴ to 10⁻¹⁵ M.

Examples of acceptable and non-acceptable monomers and additives for use in producing plastics, food and paper (designated respectively as "A" and "N/A" herein) monomers and various additives are provided in Table A.. Note that N/A chemicals often leach from the manufactured product and that very low concentrations of constituent or contaminant substances may have significant adverse effects because many cells contain estrogen receptors and/or androgen receptor receptors with binding sites that interact with natural (endogenous) or exogenous (xenobiotic) substances at very low concentrations (EC50s or IC50s of 10⁻⁶ to 10⁻¹³ M) to activate (or block) an estrogen receptor- or androgen receptor receptor-induced response.

**Table A.**

| **Polyamides** | |
|---|---|
| Poly(decamethylene carboxamide) or poly(11-aminoundecanoic acid) (nylon 11, Rislan) | A |
| Poly(hexamethylene adipamide) (nylon 66, Bri-Nylon) | A |
| Poly(hexamethylene sebacamide) (nylon 610) | A |
| Poly(nonamethylene urea) (Urylon) | A |
| Polycaprolactam, poly(pentamethylene carboxamide), or poly(6-aminohexanoic acid) nylon 6. Perlon, Caprolan) | A |
| Poly(m-phenylene isophthalamide) (Nomex) | N/A |
| | |

| **Polyethers & Polycarbonates** | |
|---|---|
| Poly(cyclohexane-1,4-dimethylene terephthalate (Kodel) | |
| | N/A |
| Poly(ethylene terephthalate) (Dacron, Terylene, Fortrel, Mylar) | |
| | N/A |
| Poly(butylene terephthalate) | N/A |
| Poly(4,4'-isopropylidine-diphenyl carbonate) or poly(4,4'-carbonato-2,2-diphenylpropane) (Lexan) | N/A |
| | |

| **Polyethers** | |
|---|---|
| Poly(butylene glycol) (Polyglycol B) | A |
| Poly(epichlorohydrin) (Polyglycol 166) | A |
| Poly(epichlorohydrin-ethylene oxide) copolymers (ECO, Hydrin) | |
| | A |
| Poly(ethylene oxide) (Carbowax) | A |
| Polyformaldehyde (Delrin, Celcon) | A |
| Nitroso rubber) | A |
| Poly(tetramethylene oxide), | |
| poly(tetrahydrofuran) | A |
| Poly(2,6-xylenol) or poly(2,6-dimethyl-1,4-phenylene oxide) (Parlene) | N/A |
| Poly(phenylene sulfide) | N/A |
| | |

| **Polyimides** | |
|---|---|
| Poly(pyromellitimide) (Kaptan) | N/A |
| Polyimide | N/A |
| | |

| **Polyimines** | |
|---|---|
| Poly(ethylene imine) | A |
| | |

| **Inorganic Polymers** | |
|---|---|
| Poly[bis(aryloxy)phosphazenes] | N/A |
| Poly[bis(methylamino)phosphazene] | A |
| Poly[bis(trifluoroethoxy) phosphazene] | A |
| Poly[bis(fluoroalkoxy)phosphazene] mixed substituent polymers (PNF or Eypel-F rubber) | A |
| Poly(carborane-siloxanes) (Dexsil) | A |
| Poly(dimethylsiloxane) (silicone rubber) | A |
| Poly(sulfur nitride), polythiazyl | A |
| | |

| **Phenol/Amine formaldehyde** | |
|---|---|
| Poly(phenol formaldehyde) resins (Bakelite) | N/A |
| Poly(melamine-formaldehyde) resins | N/A |
| Poly(urea-formaldehyde) resins | A |
| | |

| **Polysaccharides** | |
|---|---|
| Cellulose (R = H) | A |
| Carboxymethylcellulose | A |
| Ethylcellulose | A |
| Cellulose acetate | A |
| Cellulose nitrate | A |
| Ethylcellulose Methylcellulose | A |
| | |

| **Polysulfones** | |
|---|---|
| Poly(diphenylether sulfone) (polyether sulfone) | N/A |
| | |
| Poly(diphenyl sulfone-diphenylene oxide sulfone) copolymer (Astrel 360) (polyether sulfone) | N/A |
| (Udel polysulfone) | N/A |
| | |

| **Polyurethanes** | |
|---|---|
| Polyurethane | A |
| Polyurethane (Lycra) | N/A |
| | |

| **Polyvinyl & Polyolefin compounds** | |
|---|---|
| Polyacrylamide | A |
| Poly(acrylic acid) | A |
| Polyacrylonitrile (Orlon, Acrilan, Creslan) | A |
| Poly(acrylonitrile-butadiene) copolymers (nitrile rubber) | |
| | A |
| Poly(acrylonitrile-butadiene-styrene) copolymers (ABS polymers) | |
| | A |
| Poly(acrylonitrile-vinyl chloride) copolymer (Dynel) | |
| | A |
| Polybutadiene (butadiene rubber) | A |
| | |

| **Butadiene-acrylonitrile copolymers** | |
|---|---|
| Poly(1-butene) | A |
| Poly(butyl-a-cyanoacrylate) | A |
| Polychloroprene (neoprene) | A |
| Poly(chlorotrifluoroethylene-vinylidene fluoride) copolymers (Kel-F) | |
| | A |
| Poly(ethyl acrylate) | A |
| Poly(ethyl vinyl ether) | A |
| Polyethylene or polymethylene | A |
| Poly(ethylene-vinyl acetate) copolymers | A |
| Poly(ethylene-propylene) copolymers (Noedel) (EPR) | |
| | A |
| Fluorinated ethylene-propylene copolymers (Teflon FEP) | |
| | A |
| Polyisobutylene (butyl rubber) | A |
| Poly(cis-1,4-isoprene) (natural rubber) | A |
| Poly(trans-1,4-isoprene) (gutta percha) | A |
| Poly(methacrylic acid) | A |
| Poly(methyl acrylate) | A |
| Poly(methyl-2-cyanoacrylate) | A |
| Poly(methyl methacrylate) (Plexiglas, Lucite, Perspex, PMMA) | A |
| Poly(styrene butadiene) copolymers | |
| (SBR polymers) | N/A |
| Poly(styrene-a-methylstyrene) copolymer | N/A |
| Poly(tetrafluoroethylene (Teflon) | A |
| Poly(tetrafluoroethylene-hexafluoropropylene) copolymers (Teflon FEP) | |
| | A |
| Poly(vinyl acetate) | A |
| Poly(vinal alcohol) (Vinylon) | A |
| Poly(vinyl butyral)* | A |
| Poly(*N*-vinylcarbazole) (Luvican, Polectron) | N/A |
| Poly(vinyl chloride) (PVC) | A |
| Poly(vinyl chloride vinyl acetate) (Vinylite) | A |
| Poly(vinyl cinnamate) | A |
| Poly(vinyl fluoride) | A |
| Poly(vinyl pyrrolidone) (Kollidon, Periston) | A |
| Poly(vinylidine chloride) | A |
| Poly(vinylidine fluoride) | A |
| Poly(vinylidine fluoride-hexafluoropropylene) copolymer (Viton) | |
| | A |
| Poly(methyl vinyl ether) | A |
| Polypropylene (Herculon) | A |
| Polystyrene | N/A |
| Polyacetylene | A |
| | |

| **Polyacids** | |
|---|---|
| Poly(citric) acid | A |
| Poly(lactic) acid | A |
| Poly(acetic) acid | A |
| | |

| **Antioxidants (as identified by Gachter and Muller: Plastic Additives, 4^{th} ed, Hanser Pub., 2006)** | |
|---|---|
| | |
| *Alkylphenols* | |
| AO-1 | N/A |
| AO-2 | N/A |
| *Hydroxyphenylpropionates* | |
| AO-3 | N/A/ |
| AO-4 | N/A |
| AO-5 | N/A |
| AO-6 | N/A |
| AO-7 | N/A |
| AO-8 | N/A |
| AO-9 | N/A |
| AO-10 | N/A |
| AO-11 | N/A |
| *Hydroxybenzyl compounds* | |
| AO-12 | N/A |
| AO-13 | N/A |
| AO-14 | N/A |
| AO-15 | N/A |
| AO-16 | N/A |
| *Alkylidene bisphenols* | |
| AO-17 | N/A |
| AO-18 | N/A |
| AO-19 | N/A |
| AO-20 | N/A |
| AO-21 | N/A |
| *Secondary aromatic amines* | |
| AO-22 | N/A |
| AO-23 | N/A |
| AO-24 | N/A |
| AO-25 | N/A |
| *Thiobisphenols* | |
| AO-26 | N/A |
| AO-27 | N/A |
| *A_inaphenols* | |
| AO-28 | N/A |
| AO-29 | N/A |
| *Miscellaneous* | |
| AO-30 | N/A |
| AO-31 | A |
| AO-32 | N/A |
| *Thioethers* | |
| S-1 | A |
| S-2 | A |
| S-3 | A |
| *Phosphites and phosphonites* | |
| P-1 | N/A |
| P-2 | N/A |
| P-3 | N/A |
| P-4 | A |
| P-5 | N/A |
| *Sterically hindered amines* | |
| HALS-1 | A |
| HALS-2 | A |
| HALS-3 | A |
| HALS-4 | A |
| | |

| **Catalyts (as identified by** Gachter and Muller: Plastic Additives, 4th ed, Hanser Pub., 2006**)** | |
|---|---|
| | |
| amides of aliphatic acids | A |
| amides of aromatic acids and their N-substituted derivatives | NA |
| cyclic amides | A |
| II | N/A |
| III | N/A |
| IV | A |
| V | N/A |
| VI | N/A |
| VII | N/A |
| VIII | N/A |
| IX | N/A |
| X- Alkylene | A |
| X-phenylene | N/A |
| XI | N/A |
| XII | N/A |
| XIII | N/A |
| XIV | N/A |
| XV | N/A |
| XVI | N/A |
| XVII | N/A |
| | |

| **Light Stabilizers** | |
|---|---|
| UVA-1 | N/A |
| UVA-2 | N/A |
| UVA-3 | N/A |
| UVA-4 | N/A |
| UVA-5 | N/A |
| UVA-6 | N/A |
| UVA-7 | N/A |
| UVA-8 | N/A |
| UVA-9 | N/A |
| UVA-10 | N/A |
| UVA-11 | N/A |
| UVA-12 | N/A |
| UVA-13 | N/A |
| UVA-14 | N/A |
| UVA-15 | N/A |
| HALS-1 | A |
| HALS-2 | A |
| HALS-3 | N/A |
| HALS-4 | N/A |
| HALS-5 | A |
| HALS-6 | A |
| HALS-7 | N/A |
| HALS-8 | N/A |
| Ni-1 | N/A |
| Ni-2 | N/A |
| LS-1 | N/A |
| AO-1 | N/A |
| AO-2 | N/A |
| AO-3 | N/A |
| AO-4 | N/A |
| AO-5 | N/A |
| AO-6 | N/A |
| AO-7 | N/A |
| AO-8 | N/A |
| P-1 | N/A |
| P-2 | N/A |
| S-1 | A |
| S-2 | A |
| | |

| **Organic phosphites** | |
|---|---|
| Alkyl/aryl phosphites | N/A |
| Bisphenol A | N/A |
| BHT | N/A |
| DHP | N/A |
| Stearoyl-benzoyl-methane | N/A |
| Dibenzoyl methane | N/A |
| Dehydrazetic acid | N/A |
| Phthalates | N/A |
| Monocarboxylic acid esters | A |
| Acetates, propionates and butyrates | A |
| Esters of ethylbutyric and ethylhexanoic acid | A |
| Glycolic acid esters | A |
| Benzoic acid esters | N/A |
| Epoxidized fatty acid esters | N/A |
| Plasticizers based on phthalic acids | N/A |
| Aliphatic dicarboxylic acid esters | A |
| Tributyl phosphate | A |
| Tri(2-ethylbutyl) phosphate | A |
| Tri(2-ethylhexyl) phosphate | A |
| Trichloroethyl phosphate | A |
| 2-Ethylhexyl diphenyl phosphate | N/A |
| Cresyl diphenyl phosphate | N/A |
| | |

| **Food Antioxidants** | |
|---|---|
| BHA | N/A |
| BHT | N/A |
| TBHQ | N/A |
| Propyl Gallate | N/A |
| Ethoxyquin | A |
| Tocopherol | N/A |
| NDGR | N/A |
| Curcumin | N/A |
| Catechin | N/A |
| Carnosine | A |
| Glycyrrhizic Acid | A |
| Sesamin | N/A |
| Sesamolin | N/A |
| Carmosic acid | N/A |
| Carnosol | N/A |
| Rosmarinic acid | N/A |
| A = Acceptable; N/A = Non-acceptable | |

As described above, to produce an acceptable product—all acceptable chemicals used to produce the product should have no detectable estrogenic activity, anti-estrogenic activity, androgenic activity, anti-androgenic activity, or other hormonal activities ― and should NOT easily transform into or otherwise produce chemicals that exhibit such detectable activity. Detectable amounts of estrogenic activity, anti-estrogenic activity, androgenic activity, anti-androgenic activity or other hormonal activities means detectable by a sensitive, reliable, and valid *in vitro* or *in vivo* assays, such as the MCF-7 cell proliferation assay that can detect the estrogenic activity of 17β-estradiol at 10⁻¹⁴ to 10⁻¹⁵ M. Note that chemicals that are considered non-acceptable often leach from the manufactured product and that very low concentrations of constituent or contaminant substances may have significant adverse effects because many cells contain estrogen receptor and/or androgen receptor receptors with binding sites that interact with natural (endogenous) or exogenous (xenobiotic) substances at very low concentrations (EC50s or IC50s of 10⁻⁶ to 10⁻¹³ M) to activate (or block) an estrogen receptor or androgen receptor receptor-induced response.

While the present invention has been disclosed according to the preferred embodiment, those of ordinary skill in the art will understand that other embodiments have also been enabled. Even though the foregoing discussion has focused on particular embodiments, it is understood that other configurations are contemplated. In particular, even though the expressions "in one embodiment" or "in another embodiment" are used herein, these phrases are meant to generally reference embodiment possibilities and are not intended to limit the invention to those particular embodiment configurations. These terms may reference the same or different embodiments, and unless indicated otherwise, are combinable into aggregate embodiments. The terms "a", "an" and "the" mean "one or more" unless expressly specified otherwise.

When a single embodiment is described herein, it will be readily apparent that more than one embodiment may be used in place of a single embodiment. Similarly, where more than one embodiment is described herein, it will be readily apparent that a single embodiment may be substituted for that one device.

In light of the wide variety of possible of endocrine disruptive chemicals, the detailed embodiments are intended to be illustrative only and should not be taken as limiting the scope of the invention. Rather, what is claimed as the invention is all such modifications as may come within the spirit and scope of the following claims and equivalents thereto.

None of the description in this specification should be read as implying that any particular element, step or function is an essential element which must be included in the claim scope. The scope of the patented subject matter is defined only by the allowed claims and their equivalents. Unless explicitly recited, other aspects of the present invention as described in this specification do not limit the scope of the claims.

### Further numbered embodiments:

1. A polymeric material substantially void of endocrine disruptive chemicals comprising:
   a plastic material with additives, said additives consist of chemicals with molecular weights between 90 and 1000 daltons.
2. The polymeric material of embodiment 1 wherein said chemical does not have a five or six member carbon or nitrogen ring, and/or does not have protrusions that prevent interactions with the ligand binding site of the estrogen and androgen receptor.
3. The polymeric material of embodiment 2 wherein said chemicals do not have two anchor points corresponding to the 3-keto and 17β-hydroxyl groups on DHT.
4. The polymeric material of embodiment 2 wherein said chemicals do not have trifluoromethyl and methyl groups.
5. The polymeric material of embodiment 2 wherein said chemicals do not have a hydrogen-bond acceptor or donor group at the position corresponding to the 17β-OH group of DHT.
6. The polymeric material of embodiment 2 wherein said chemicals do not have a 10 angstrom distance between the hydrogen bonding and electrostatic interaction groups corresponding to the 3-keto and 17β-OH groups in DHT.
7. The polymeric material of embodiment 2 wherein said chemicals do not have a benzene ring with one or more hydroxyl, chloride, or bromide groups.
8. The polymeric material of embodiment 2 wherein said chemicals do not have an H-bond donor mimicking the 17α-OH of 17β-estradiol.
9. The polymeric material of embodiment 2 wherein said chemicals do not have a spacing of 9 ― 13 Å between two -OH groups at either end of a planar, and primarily hydrophobic, chemical.
10. The polymeric material of embodiment 2 wherein said chemicals do not have teric hydrophobic centers mimicking 7α and 11β steric configuration of 17α -estradiol.
11. A polymeric material substantially void of endocrine disruptive chemicals comprising :
   a plastic material with additives having molecular weights greater than 1000 daltons, that may have a five or six member carbon or nitrogen ring, and/or a hydrophobicity log partition coefficient from approximately 4 to approximately 7, and/or not having protrusions that prevent interactions with the ligand binding site of the estrogen and androgen receptor, and and/or have one or more of the following properties:
      for androgenic activity: two anchor points corresponding to the 3-keto and 17β-hydroxyl groups on DHT; trifluoromethyl and methyl groups such as those adjacent to the nitro group in flutamide and fenitrothion; a hydrogen-bond acceptor or donor group at the position corresponding to the 17β-OH group of DHT; a 10 angstrom distance between the hydrogen bonding and electrostatic interaction groups corresponding to the 3-keto and 17β-OH groups in DHT; and
      for endrogenic activity: a phenolic ring; an H-bond donor mimicking the 17α - OH of 17β-estradiol; a spacing of 9 ― 13 Å between two -OH groups at either end of a planar, and primarily hydrophobic, chemical; steric hydrophobic centers mimicking 7α and 11β steric configuration of 17α -estradiol.

## Claims

1. A process for the
i) identification of monomers or additives in materials that are free from endocrine disruptive activity, or
ii) selection of chemicals that are acceptable for use in the production of plastics that are substantially free of endocrine disruptive activities.

2. The process of claim 1, wherein said monomers, additives or chemicals lack estrogen receptor/androgen receptor activation.

3. The process of claim 2 wherein said activation is measured by the MCF-7 cell proliferation assay.

4. The process of any one of claims 1 - 3 wherein said method involves avoiding monomers, additives or chemicals having:
molecular weights between 90 and 1000 Daltons,
a five or six member carbon or nitrogen ring,
a hydrophobicity log partition coefficient from approximately 4 to approximately 7;
and that do not have protrusions that prevent interactions with the ligand binding site of the estrogen and androgen receptor,
and have one or more of the following properties:
for androgenic activity: two anchor points corresponding to the 3-keto and 17β-hydroxyl groups on DHT; trifluoromethyl and methyl groups such as those adjacent to the nitro group in flutamide and fenitrothion; a hydrogen-bond acceptor or donor group at the position corresponding to the 17β-OH group of DHT; a 10 angstrom distance between the hydrogen bonding and electrostatic interaction groups corresponding to the 3-keto and 17β-OH groups in DHT; and
for endrogenic activity: a benzene ring with one or more hydroxyl, chloride, or bromide groups; an H-bond donor mimicking the 17α-OH of 17β-estradiol; a spacing of 9 ― 13 Å between two -OH groups at either end of a planar, and primarily hydrophobic, chemical; steric hydrophobic centers mimicking 7α and 11β steric configuration of 17a-estradiol.

5. A polymeric material substantially void of endocrine disruptive chemicals comprising:
i) a plastic material with additives, said additives consist of chemicals with molecular weights between 90 and 1000 daltons and said chemicals do not have a five or six member carbon or nitrogen ring, or said chemicals have protrusions that prevent interactions with the ligand binding site of the estrogen and androgen receptor, or
ii) a plastic material with additives having molecular weights greater than 1000 Daltons, that may have a five or six member carbon or nitrogen ring, and/or a hydrophobicity log partition coefficient from approximately 4 to approximately 7, and/or not having protrusions that prevent interactions with the ligand binding site of the estrogen and androgen receptor, and/or not having one or more of the following properties:
for androgenic activity: two anchor points corresponding to the 3-keto and 17β-hydroxyl groups on DHT; trifluoromethyl and methyl groups such as those adjacent to the nitro group in flutamide and fenitrothion; a hydrogen-bond acceptor or donor group at the position corresponding to the 17β-OH group of DHT; a 10 angstrom distance between the hydrogen bonding and electrostatic interaction groups corresponding to the 3-keto and 17β-OH groups in DHT; and
for endrogenic activity: a phenolic ring; an H-bond donor mimicking the 17α - OH of 17β-estradiol; a spacing of 9 ― 13 Å between two -OH groups at either end of a planar, and primarily hydrophobic, chemical; steric hydrophobic centers mimicking 7α and 11β steric configuration of 17α -estradiol.

6. The polymeric material of claim 5, wherein said plastic material comprises one or a combination, blend or copolymer of more than one, of the following:
polyethylene, polypropylene, poly(decamethylene carboxamide), poly(hexamethylene adipamide), poly(hexamethylene sebacamide), poly(nonamethylene urea), polycaprolactam, poly(butylene glycol), poly(epichlorohydrin), poly(epichlorohydrinethylene oxide), poly(ethylene oxide), nitroso rubber, poly(tetramethylene oxide), polyimines, polysaccharides, polyurethane, polyacetylene, polyethylene-hexene copolymer, polyethylene-butene copolymer, and polyethylene-octene copolymer.

7. The polymeric material of claim 5 or claim 6, wherein the endocrine disruptive chemicals include at least one of a phenolic or hydroxyl triazine group.

8. The polymeric material of any one of claims 5―7 wherein said polymeric material comprises at least one of the compounds categorised as "A" in the table below, and wherein said polymeric material does not comprise the compounds categorised as "N/A" in the table below
| **Polyamides** | |
|---|---|
| Poly(decamethylene carboxamide) or poly(11-aminoundecanoic acid) (nylon 11, Rislan) | A |
| Poly(hexamethylene adipamide) (nylon 66, Bri-Nylon) | A |
| Poly(hexamethylene sebacamide) (nylon 610) | A |
| Poly(nonamethylene urea) (Urylon) | A |
| Polycaprolactam, poly(pentamethylene carboxamide), or poly(6-aminohexanoic acid) nylon 6. Perlon, Caprolan) | A |
| Poly(m-phenylene isophthalamide) (Nomex) | N/A |
| | |
| **Polyesters & Polycarbonates** | |
|---|---|
| Poly(cyclohexane-1,4-dimethylene terephthalate (Kodel) | N/A |
| | |
| Poly(ethylene terephthalate) (Dacron, Terylene, Fortrel, Mylar) | N/A |
| | |
| Poly(butylene terephthalate) | N/A |
| Poly(4,4'-isopropylidine-diphenyl carbonate) or poly(4,4'-carbonato-2,2-diphenylpropane) (Lexan) | N/A |
| | |
| **Polyethers** | |
|---|---|
| Poly(butylene glycol) (Polyglycol B) | A |
| Poly(epichlorohydrin) (Polyglycol 166) | A |
| Poly(epichlorohydrin-ethylene oxide) copolymers (ECO, Hydrin) | A |
| | |
| Poly(ethylene oxide) (Carbowax) | A |
| Polyformaldehyde (Delrin, Celcon) | A |
| Nitroso rubber) | A |
| Poly(tetramethylene oxide), | |
| poly(tetrahydrofuran) | A |
| Poly(2,6-xylenol) or poly(2,6-dimethyl-1,4-phenylene oxide) (Parlene) | N/A |
| Poly(phenylene sulfide) | N/A |
| | |
| **Polyimides** | |
|---|---|
| Poly(pyromellitimide) (Kaptan) | N/A |
| Polyimide | N/A |
| | |
| **Polyimines** | |
|---|---|
| Poly(ethylene imine) | A |
| | |
| **Inorganic Polymers** | |
|---|---|
| Poly[bis(aryloxy)phosphazenes] | N/A |
| Poly[bis(methylamino)phosphazene] | A |
| Poly[bis(trifluoroethoxy) phosphazene] | A |
| Poly[bis(fluoroalkoxy)phosphazene] mixed substituent polymers (PNF or Eypel-F rubber) | A |
| Poly(carborane-siloxanes) (Dexsil) | A |
| Poly(dimethylsiloxane) (silicone rubber) | A |
| Poly(sulfur nitride), polythiazyl | A |
| | |
| **Phenol/Amine formaldehyde** | |
|---|---|
| Poly(phenol formaldehyde) resins (Bakelite) | N/A |
| Poly(melamine-formaldehyde) resins | N/A |
| Poly(urea-formaldehyde) resins | A |
| | |
| **Polysaccharides** | |
|---|---|
| Cellulose (R = H) | A |
| Carboxymethylcellulose | A |
| Ethylcellulose | A |
| Cellulose acetate | A |
| Cellulose nitrate | A |
| Ethylcellulose Methylcellulose | A |
| | |
| **Polysulfones** | |
|---|---|
| Poly(diphenylether sulfone) (polyether sulfone) | N/A |
| Poly(diphenyl sulfone-diphenylene oxide sulfone) copolymer (Astrel 360) (polyether sulfone) | N/A |
| (Udel polysulfone) | N/A |
| | |
| **Polyurethanes** | |
|---|---|
| Polyurethane | A |
| Polyurethane (Lycra) | N/A |
| | |
| **Polyvinyl & Polyolefin compounds** | |
|---|---|
| Polyacrylamide | A |
| Poly(acrylic acid) | A |
| Polyacrylonitrile (Orlon, Acrilan, Creslan) | A |
| Poly(acrylonitrile-butadiene) copolymers (nitrile rubber) | A |
| Poly(acrylonitrile-butadiene-styrene) copolymers (ABS polymers) | A |
| Poly(acrylonitrile-vinyl chloride) copolymer (Dynel) | A |
| Polybutadiene (butadiene rubber) | A |
| | |
| **Butadiene-acrylonitrile copolymers** | |
|---|---|
| Poly(1-butene) | A |
| Poly(butyl-*a*-cyanoacrylate) | A |
| Polychloroprene (neoprene) | A |
| Poly(chlorotrifluoroethylene-vinylidene fluoride) copolymers (Kel-F) | A |
| Poly(ethyl acrylate) | A |
| Poly(ethyl vinyl ether) | A |
| Polyethylene or polymethylene | A |
| Poly(ethylene-vinyl acetate) copolymers | A |
| Poly(ethylene-propylene) copolymers (Noedel) (EPR) | A |
| Fluorinated ethylene-propylene copolymers (Teflon FEP) | A |
| Polyisobutylene (butyl rubber) | A |
| Poly(*cis*-1,4-isoprene) (natural rubber) | A |
| Poly(*trans*-1,4-isoprene) (gutta percha) | A |
| Poly(methacrylic acid) | A |
| Poly(methyl acrylate) | A |
| Poly(methyl-2-cyanoacrylate) | A |
| Poly(methyl methacrylate) (Plexiglas, Lucite, Perspex, PMMA) | A |
| Poly(styrene butadiene) copolymers | |
| (SBR polymers) | N/A |
| Poly(styrene-*a*-methylstyrene) copolymer | N/A |
| Poly(tetrafluoroethylene (Teflon) | A |
| Poly(tetrafluoroethylene-hexafluoropropylene) copolymers (Teflon FEP) | A |
| | |
| Poly(vinyl acetate) | A |
| Poly(vinal alcohol) (Vinylon) | A |
| Poly(vinyl butyral)* | A |
| Poly(*N-*vinylcarbazole) (Luvican, Polectron) | N/A |
| Poly(vinyl chloride) (PVC) | A |
| Poly(vinyl chloride vinyl acetate) (Vinylite) | A |
| Poly(vinyl cinnamate) | A |
| Poly(vinyl fluoride) | A |
| Poly(vinyl pyrrolidone) (Kollidon, Periston) | A |
| Poly(vinylidine chloride) | A |
| Poly(vinylidine fluoride) | A |
| Poly(vinylidine fluoride-hexafluoropropylene) copolymer (Viton) | A |
| | |
| Poly(methyl vinyl ether) | A |
| Polypropylene (Herculon) | A |
| Polystyrene | N/A |
| Polyacetylene | A |
| | |
| **Polyacids** | |
|---|---|
| Poly(citric) acid | A |
| Poly(lactic) acid | A |
| Poly(acetic) acid | A |
| | |
| **Antioxidants (as identified by Gachter and Muller: Plastic Additives, 4^{th} ed, Hanser Pub., 2006)** | |
|---|---|
| | |
| *Alkylphenols* | |
| AO-1 | N/A |
| AO-2 | N/A |
| *Hydroxyphenylpropionates* | |
| AO-3 | N/A/ |
| AO-4 | N/A |
| AO-5 | N/A |
| AO-6 | N/A |
| AO-7 | N/A |
| AO-8 | N/A |
| AO-9 | N/A |
| AO-10 | N/A |
| AO-11 | N/A |
| *Hydroxybenzyl compounds* | |
| AO-12 | N/A |
| AO-13 | N/A |
| AO-14 | N/A |
| AO-15 | N/A |
| AO-16 | N/A |
| *Alkylidene bisphenols* | |
| AO-17 | N/A |
| AO-18 | N/A |
| AO-19 | N/A |
| AO-20 | N/A |
| AO-21 | N/A |
| *Secondary aromatic amines* | |
| AO-22 | N/A |
| AO-23 | N/A |
| AO-24 | N/A |
| AO-25 | N/A |
| *Thiobisphenols* | |
| AO-26 | N/A |
| AO-27 | N/A |
| *A_inaphenols* | |
| AO-28 | N/A |
| AO-29 | N/A |
| *Miscellaneous* | |
| AO-30 | N/A |
| AO-31 | A |
| AO-32 | N/A |
| *Thioethers* | |
| S-1 | A |
| S-2 | A |
| S-3 | A |
| *Phosphites and phosphonites* | |
| P-1 | N/A |
| P-2 | N/A |
| P-3 | N/A |
| P-4 | A |
| P-5 | N/A |
| *Sterically hindered amines* | |
| HALS-1 | A |
| HALS-2 | A |
| HALS-3 | A |
| HALS-4 | A |
| | |
| **Catalyts (as identified by Gachter and Muller: Plastic Additives, 4^{th} ed, Hanser** Pub., 2006) | |
|---|---|
| amides of aliphatic acids | A |
| amides of aromatic acids and their N-substituted derivatives | NA |
| cyclic amides | A |
| II | N/A |
| III | N/A |
| IV | A |
| V | N/A |
| VI | N/A |
| VII | N/A |
| VIII | N/A |
| IX | N/A |
| X- Alkylene | A |
| X-phenylene | N/A |
| XI | N/A |
| XII | N/A |
| XIII | N/A |
| XIV | N/A |
| XV | N/A |
| XV | N/A |
| XVII | N/A |
| | |
| **Light Stabilizers** | |
|---|---|
| UVA-1 | N/A |
| UVA-2 | N/A |
| UVA-3 | N/A |
| UVA-4 | N/A |
| UVA-5 | N/A |
| UVA-6 | N/A |
| UVA-7 | N/A |
| UVA-8 | N/A |
| UVA-9 | N/A |
| UVA-10 | N/A |
| UVA-11 | N/A |
| UVA-12 | N/A |
| UVA-13 | N/A |
| UVA-14 | N/A |
| UVA-15 | N/A |
| HALS-1 | A |
| HALS-2 | A |
| HALS-3 | N/A |
| HALS-4 | N/A |
| HALS-5 | A |
| HALS-6 | A |
| HALS-7 | N/A |
| HALS-8 | N/A |
| Ni-1 | N/A |
| Ni-2 | N/A |
| LS-1 | N/A |
| AO-1 | N/A |
| AO-2 | N/A |
| AO-3 | N/A |
| AO-4 | N/A |
| AO-5 | N/A |
| AO-6 | N/A |
| AO-7 | N/A |
| AO-8 | N/A |
| P-1 | N/A |
| P-2 | N/A |
| S-1 | A |
| S-2 | A |
| | |
| **Organic phosphites** | |
|---|---|
| Alkyl/aryl phosphites | N/A |
| Bisphenol A | N/A |
| BHT | N/A |
| DHP | N/A |
| Stearoyl-benzoyl-methane | N/A |
| Dibenzoyl methane | N/A |
| Dehydrazetic acid | N/A |
| Phthalates | N/A |
| Monocarboxylic acid esters | A |
| Acetates, propionates and butyrates | A |
| Esters of ethylbutyric and ethylhexanoic acid | A |
| Glycolic acid esters | A |
| Benzoic acid esters | N/A |
| Epoxidized fatty acid esters | N/A |
| Plasticizers based on phthalic acids | N/A |
| Aliphatic dicarboxylic acid esters | A |
| Tributyl phosphate | A |
| Tri(2-ethylbutyl) phosphate | A |
| Tri(2-ethylhexyl) phosphate | A |
| Trichloroethyl phosphate | A |
| 2-Ethylhexyl diphenyl phosphate | N/A |
| Cresyl diphenyl phosphate | N/A |
| | |
| **Food Antioxidants** | |
|---|---|
| BHA | N/A |
| BHT | N/A |
| TBHQ | N/A |
| Propyl Gallate | N/A |
| Ethoxyquin | A |
| Tocopherol | N/A |
| NDGR | N/A |
| Curcumin | N/A |
| Catechin | N/A |
| Carnosine | A |
| Glycyrrhizic Acid | A |
| Sesamin | N/A |
| Sesamolin | N/A |
| Carmosic acid | N/A |
| Carnosol | N/A |
| Rosmarinic acid | N/A |

9. The polymeric material of Claim 5 wherein said additive does not have a five or six member carbon or nitrogen ring, and/or does not have protrusions that prevent interactions with the ligand binding site of the estrogen and androgen receptor, or

10. The polymeric material of Claim 9, wherein said additives do not have two anchor points corresponding to the 3-keto and 17β-hydroxyl groups on DHT, or
wherein said additives do not have trifluoromethyl and methyl groups, or wherein said additives do not have a hydrogen-bond acceptor or donor group at the position corresponding to the 17β-OH group of DHT, or
wherein said additives do not have a 10 angstrom distance between the hydrogen bonding and electrostatic interaction groups corresponding to the 3-keto and 17β-OH groups in DHT, or
wherein said additives do not have a benzene ring with one or more hydroxyl, chloride, or bromide groups, or
wherein said additives do not have an H-bond donor mimicking the 17α-OH of 17β-estradiol, or
wherein said additives do not have a spacing of 9 ― 13 Å between two -OH groups at either end of a planar, and primarily hydrophobic, chemical, or
wherein said additives do not have teric hydrophobic centers mimicking 7α and 11 β steric configuration of 17a -estradiol.

11. A process for producing a polymeric material of any one of claims S - 10.

12. The process of claim 11, wherein said process comprises the polymerisation of monomers assisted by catalysts.

13. The process of claims 11 or 12 wherein additives are introduced after synthesis of the polymeric material to enhance its properties.

14. A product obtainable by the process of any one of claims 11 - 13.

15. The process of any one of claims 1 - 4 wherein said monomers, additives or chemicals do not have a five or six member carbon or nitrogen ring, and/or do not have protrusions that prevent interactions with the ligand binding site of the estrogen and androgen receptor, and preferably
wherein said monomers, additives or chemicals do not have two anchor points corresponding to the 3-keto and 17β-hydroxyl groups on DHT, or
wherein said monomers, additives or chemicals do not have trifluoromethyl and methyl groups, or
wherein said monomers, additives or chemicals do not have a hydrogen-bond acceptor or donor group at the position corresponding to the 17p-OH group of DHT, or
wherein said monomers, additives or chemicals do not have a 10 angstrom distance between the hydrogen bonding and electrostatic interaction groups corresponding to the 3-keto and 17p-OH groups in DHT, or
wherein said monomers, additives or chemicals do not have a benzene ring with one or more hydroxyl, chloride, or bromide groups, or
wherein said monomers, additives or chemicals do not have an H-bond donor mimicking the 17a-OH of 17β-estradiol, or
wherein said monomers, additives or chemicals do not have a spacing of 9 - 13 Å between two -OH groups at either end of a planar, and primarily hydrophobic, chemical, or
wherein said additives do not have teric hydrophobic centers mimicking 7a and I 10 steric configuration of 17a -estradiol.
